# EUROPEAN PATENT APPLICATION

(11) **EP 3 498 500 A1**
(43) Date of publication of application: **19.06.2019**
(21) Application number: 18210014.9
(22) Date of filing: 04.12.2018
(51) Int. Cl.: B60C 13/00

(54) **PNEUMATIC TYRE**

(30) Priority: 15.12.2017 IT 201700144933
(71) Applicant: Bridgestone Europe NV/SA, 1932 Zaventem (BE)
(72) Inventor: Polentini, Valerio, 00128 Roma (IT)
(74) Representative: Marchetti, Alessio

(57) **Abstract**

The present invention relates to a pneumatic tyre. In particular, it relates to a pneumatic tyre with a special sidewall shape, such as to incorporate an affixation region for codes of various types.

## Description

### Technical field of the invention

The present invention relates to a pneumatic tyre. In particular, it relates to a pneumatic tyre with a special sidewall shape, such as to incorporate a region for the affixation of codes of various types.

### Background

Ever more widespread in the sector is the tendency to list increasingly diverse information on the sidewall of pneumatic tyres, both of a more technical and a more commercial nature.

In this regard, the custom is by now quite well established of reproducing on the sidewall of the pneumatic tyre a code that can be read automatically by optical vision systems, such as for example bar codes or preferably QR-codes. A code of this type, once read by a scanner, can give access, for example via the Internet by means of a connection to a remote database, to all necessary information in relation to the pneumatic tyre.

However it is known that the affixing of codes upon a surface such as that of a pneumatic tyre, particularly codes that can read automatically, poses numerous problems.

The most obvious limits are given by the black coloring of pneumatic tyres, by some of the physical characteristics of the material thereof (flexibility, deformability, etc.), etc.

These limitations imply, as consequences, both difficulty in being able to affix the code correctly on the sidewall of the pneumatic tyre and difficulty, once affixed, in being able to read a code properly.

For this reason various methods for the affixation of such codes are being studied.

One of these methods is the engraving of the code by means of lasers on a portion of the sidewall. The difference in depth between low-relief and high-relief parts produces a sufficient difference in contrast to allow the vision equipment to discriminate between two different values, and therefore to attribute the interpretation to a code which can be a bar code or also a QR-code.

However, the shape of a pneumatic tyre, and particularly that of the sidewall thereof, renders such engraving operations, and especially reading operations, particularly demanding.

This is due essentially to the wide variation in the shapes and profiles of pneumatic tyres that make it impossible to always identify a possible region that has the correct and optimal characteristics in relation to amplitude, inclination and radius of curvature in order to allow for both the correct engraving and the correct reading of the code.

Problems of the same type can also be encountered when it is required to directly print - using now well established printing techniques - the code on the sidewall of the pneumatic tyre, applying it by the gluing onto the sidewall of the pneumatic tyre of a support (rubber or paper) whereupon the code has been previously printed or engraved, or also in the case wherein the code is directly applied during the molding of the pneumatic tyre.

### Summary of the Invention

The technical problem addressed and resolved by this invention is therefore to provide a pneumatic tyre having a shape of the sidewall, or at least a portion thereof, that facilitates the affixing of a code, preferably of the QR-code type, and the subsequent reading thereof by means of automatic vision and/or scanning equipment.

This is achieved by means of a pneumatic tyre as defined in claim 1.

Further characteristics of the present invention are defined in the corresponding dependent claims.

### Brief description of the figures

The advantages, together with the characteristics and the way of usage of the present invention, will become clear from the following detailed description of its preferred embodiments given purely by way of non-limiting example.

Reference will be made to the figures of the accompanying drawings, wherein:
- Figure 1 is a partial section view of a pneumatic tyre of the prior art showing the profile of the sidewall thereof;
- Figure 2 is a partial perspective view of a pneumatic tyre according to the present invention;
- Figure 3 is a partial section view of a pneumatic tyre according to a possible embodiment of the invention;
- Figure 4 is a partial section view of a pneumatic tyre according to a further possible embodiment of the invention;
- Figure 5 shows, in an illustrative manner, an affixation inlay for a pneumatic tyre according to the invention; and
- Figure 6 shows, in an illustrative manner, an affixation region bearing reference elements.

### Detailed description of embodiments of the invention

Some embodiments of the present invention will be described below, making reference to the aforementioned figures.

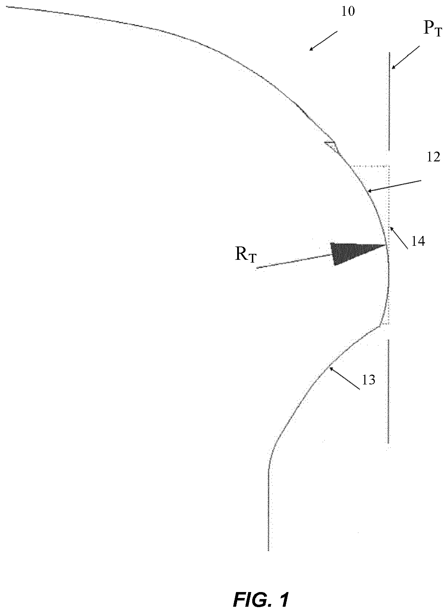

With initial reference to Figure 1, this shows, in a partial section view, the profile 12 of the sidewall of a prior art pneumatic tyre 10 whereupon it is intended, by way of example, to engrave a code by means of laser equipment.

From this figure it is easy to appreciate that, depending upon the shape characteristics of the same pneumatic tyre and therefore further amplified for "lowered" pneumatic tyres, there is the problem of being able to arrange on the sidewall of the pneumatic a surface extension that is sufficient for the affixation of a code, and especially, for example in the case of engraving, of an engraving area wherein the surface area thereof has characteristics that are suitable for the same engraving.

It is evident that the present invention can advantageously be applied, both when the method for the affixation of the code is by means of engraving (for example by laser as described above) and when the code affixation process makes use of different technologies, such as for example techniques for directly printing the code onto the sidewall of the pneumatic tyre, techniques for the gluing onto the sidewall of the pneumatic tyre - of a support (rubber, paper, plastic, etc.) whereupon the code has been previously been printed or engraved, or also in the case wherein the code is applied directly during the molding of the pneumatic tyre.

Within the present description, the term "lowered" or "low-profile" means a pneumatic tyre wherein the sidewall thereof has a height that is lower by at least 50% in relation to the width of the tread thereof.

In fact, especially with low-profile pneumatic tyres, there is already little space available, this being due in fact to the reduced height of the sidewall. Furthermore, the profile 12 of the pneumatic tyre has, as a technical solution that has by now been widely adopted, a profile with a particularly reduced radius of curvature R_{T}, and therefore with an especially pronounced convexity.

In the figure, indicated with P_{T} is a plane, parallel to the circumferential plane of the pneumatic tyre, which can properly represent both the working plan of the engraving equipment and the working plane of code reading equipment.

With respect to the execution of the engraving, it is obvious from the reduced radius of curvature that an engraving surface will face the working plane P_{T} according to angles (taken along a radial direction of the pneumatic tyre) that can reach decidedly higher values. The smaller the radius R_{T}, the higher, at least at the periphery of the engraving, the angle will be in relation to the working plane P_{T}.

Consequently, the code thus engraved may have defects such that it cannot easily be read, or not be read at all, by automatic scanning equipment.

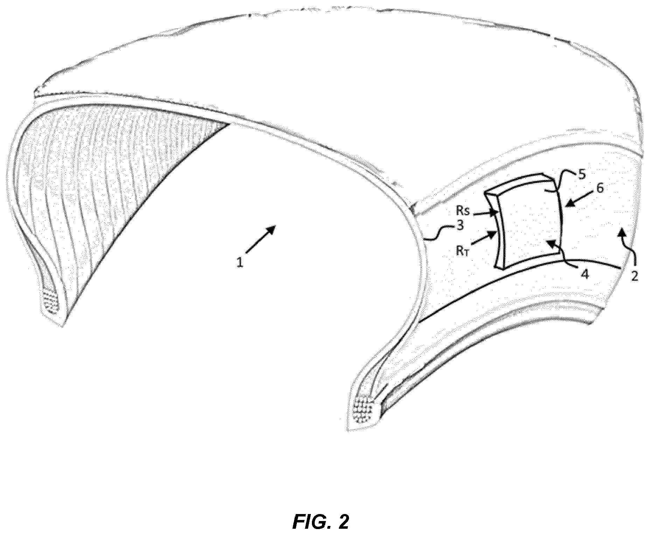

Referring now to Figure 2, this shows a partial perspective view of a pneumatic tyre according to the present invention.

In general, according to the invention, a pneumatic tyre 1 having a sidewall 2 having a profile 3 comprises at least one affixation region 4 for the affixation of a code at the sidewall 2 thereof.

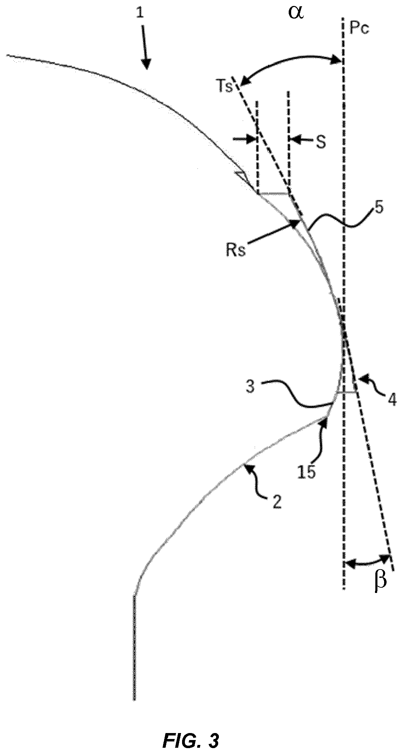

Figure 3 is a partial section view of a pneumatic tyre according to a possible embodiment of the invention.

The affixation region 4 has an affixation surface 5 which has, along a radial direction of the pneumatic tyre, an average radius of curvature R_{S}. It is to be understood here that the affixation surface 5 may have a radius of curvature that is substantially constant and substantially equal to the average radius of curvature R_{S}. However, even for design choices, the surface 5 can have sections with different radii of curvature along the radial direction of the pneumatic tyre. In the latter case, for the purpose of the present invention, reference can be made to the average radius of curvature R_{S} as the radius of curvature of the circumference that best approximates the profile of the affixation surface 5.

Preferably, such an average radius of curvature R_{S} is greater than 50 mm. Even more preferably, the average radius of curvature R_{S} is chosen to be greater than 65 mm.

This ensures that, for example in the case of direct engraving of the code, the engraving angle of the laser during the application (or rather the engraving) of the code is not likely to lead to the defects mentioned with reference to the prior art. The same applies in those cases wherein the code is to be applied by means of different techniques, as previously hypothesized.

The affixation region 4 is located on an affixation inlay 6 having a thickness S at least in part protruding in relation to the profile 3 of the sidewall 2 of the pneumatic tyre 1.

According to a preferred embodiment of the present invention, the thickness S of the affixation inlay 6 is always greater than or equal to 0 mm. Also in the case wherein this thickness is not constant throughout the extension of the affixation inlay 6, its being nonetheless greater than or equal to zero ensures that in any case the implementation of the affixation inlay will not lead to the removal of rubbery material from the sidewall of the pneumatic tyre. In other words, the inlay is implemented in high-relief, preferably wholly protruding in relation to the profile of the sidewall of the pneumatic tyre.

According to some embodiments, in particular when the code affixation method is to be by engraving, it is preferable for the inlay to have a minimum thickness S greater than zero and, still more preferably, at least equal to the engraving depth, thus ensuring that no material is removed from the sidewall not even by means of the engraving of the code itself. For example, the minimum thickness could, in this case, be at least 1.5 mm.

Advantageously, according to some embodiments of the present invention, it can be expected that the affixation inlay 6 will be implemented in such a way that a line T_{S}, tangential to the affixation surface 5 along the radial direction of the pneumatic tyre 1 forms an angle α, β between -45° and +45° with a circumferential plane P_{C} orthogonal to the axis of rotation of the pneumatic tyre 1. Preferably, this angle α, β is between -30° and +30°.

In this sense, for the verification of any such constraint, the tangent line T_{S} can be considered to be at least in proximity of the ends of the affixation inlay 6, given that the average radius of curvature Rₛ of the affixation surface is sufficiently homogeneous along the same surface and does not have particularly accentuated variations.

Angles α, β between the ranges indicated ensure good readability of the code by means of automatic optical equipment.

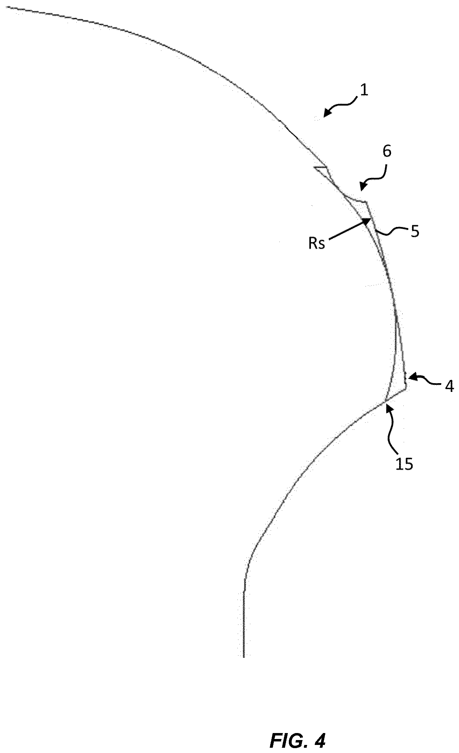

According to further embodiments, illustrated by way of example in Figure 4, wherein the pneumatic tyre 1 has on the sidewall 2 a circumferential edge 15, the affixation inlay 6 can be implemented such as to substantially coincide along one side thereof with such a circumferential edge 15 in such a way as to create continuity with the various portions of the involved profile. To this end, the side walls of the inlay 6, along the thickness thereof, can also be shaped in such a way to continuously align with the profile of the sidewall of the pneumatic tyre.

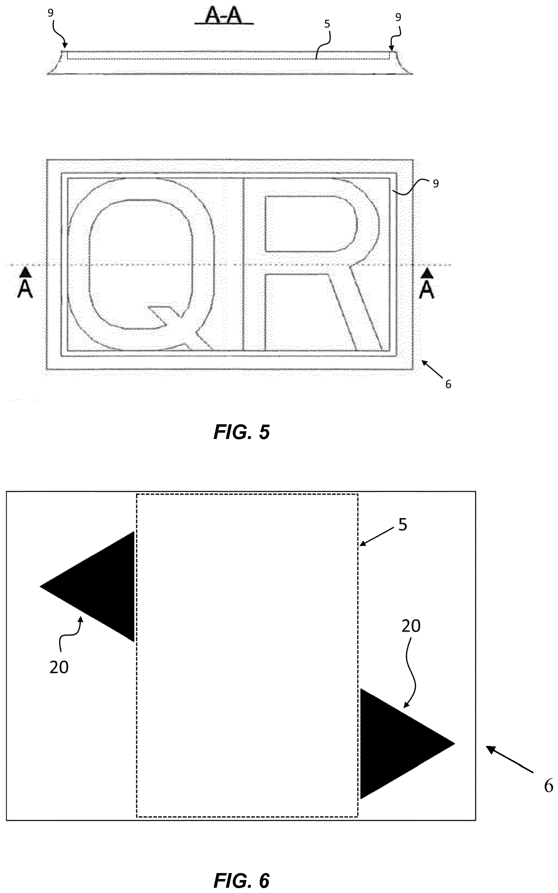

Although it is not considered to be necessarily limiting, one of the preferred embodiments of the present invention allows for the affixation inlay 6 to define an affixation region 4 of a substantially quadrilateral shape as shown in Figures 5A, 5B, 5C that shows, by way of example, an affixation inlay 6 according to the invention, both in plan and side view.

According to some embodiments, the affixation inlay 6 can also provide for a protective perimeter edge 9 protruding from the affixation surface 5. This edge 9, once the code has been applied, would protect it from possible abrasions that can occur due to friction of the pneumatic tyre during use.

According to further embodiments, the pneumatic tyre according to the invention may also comprise one or more reference elements 20 that are suitable for facilitating the automatic identification of the affixation region 4 and/or of the affixation surface 5.

According to some embodiments of the present invention, in order to improve the automatic identification, the reference elements 20 can be provided in relief in relation to the affixation surface 5 and/or implemented in colors other than that of the pneumatic tyre.

By way of example, Figure 6 shows an affixation inlay 6 which comprises triangular reference elements 20 reproduced directly upon the affixation inlay 6 in order to delimit the useful affixation surface 5.

The present invention has heretofore been described with reference to the preferred embodiments thereof. It is intended that each of the technical solutions implemented in the preferred embodiments described herein by way of example can advantageously be combined in different ways between them in order to give form to other embodiments, which share the same inventive nucleus and which all fall within the scope of protection afforded by the claims recited hereinafter.

## Claims

1. Pneumatic tyre (1) comprising a sidewall (2) having a profile (3), said pneumatic tyre (1) comprising at least one affixation region (4) for the affixation of a code upon said sidewall (2), wherein said affixation region (4) has an affixation surface (5) having, along a radial direction of the pneumatic tyre (1), an average radius of curvature (R_{S}) greater than 50 mm, said affixation region (4) being located upon an affixation inlay (6),
**characterized in that** it is wholly located on the sidewall (2) of said pneumatic tyre (1), having a thickness (S), at least in part greater than 0 mm and protruding in relation to said profile (3) of the sidewall (2) of the pneumatic tyre (1), said pneumatic tyre (1) furthermore comprising one or more reference elements (20) suitable for allowing for the automatic identification of said affixation region (4).

2. Pneumatic tyre (1) according to claim 1, wherein a line tangent to said affixation surface (5) along the radial direction of the pneumatic tyre (1), forms an angle (α, β) with a circumferential plane of the pneumatic tyre (1) between -45° to +45°.

3. Pneumatic tyre according to claim 2, wherein said angle (α, β) is between -30° to +30°.

4. Pneumatic tyre (1) according to one of the preceding claims, wherein said thickness (S) is variable along the extension of the affixation inlay (6).

5. Pneumatic tyre (1) according to claim 5 wherein said thickness (S) is equal to at least 1.5 mm.

6. Pneumatic tyre according to one of the preceding claims, wherein said average radius of curvature (R_{S}) is greater than 65 mm.

7. Pneumatic tyre according to one of the preceding claims, wherein said sidewall (2) has a circumferential edge (15) and said affixation inlay (6) has a side coinciding with said circumferential edge (15).

8. Pneumatic tyre according to one of the preceding claims, wherein said affixation inlay (6) defines an affixation region (4) of a substantially quadrilateral shape.

9. Pneumatic tyre according to one of the preceding claims, wherein said affixation inlay (6) comprises a protective perimeter edge (9) protruding from said affixation surface (5).
